# EUROPEAN PATENT APPLICATION

(11) **EP 4 840 666 A1**
(43) Date of publication of application: **18.11.2026**
(21) Application number: 25176047.6
(22) Date of filing: 13.05.2025
(51) Int. Cl.: B60K 17/02, B60K 1/00, F16H 3/66

(54) **ELECTRIC DRIVELINE WITH PLANETARY GEAR SET INSIDE A STATOR CAVITY**

(60) Divisional application: 26173755.5
(71) Applicant: Volvo Construction Equipment AB, 631 85 Eskilstuna (SE)
(72) Inventor: STENBRATT, Ulf, 434 94 VALLDA (SE); HILTUNEN, Larry, 423 36 TORSLANDA (SE); MATTSSON, Per, 294 91 SÖLVESBORG (SE); KVIST, Roland, 360 42 BRAÅS (SE)
(74) Representative: Kransell & Wennborg KB

(57) **Abstract**

The present disclosure relates to an electric driveline for a vehicle, the electric driveline comprising an electric machine comprising a stator and a rotor, the stator being accommodated radially inside the rotor and comprising a cavity formed inside the stator; at least one drive shaft drivingly connectable to a wheel of the vehicle; and a first planetary gear set arranged in the cavity, the first planetary gear set comprising a plurality of planetary members, wherein a first planetary member is directly connected to the rotor, a second planetary member is selectively connectable to the stator via a first brake, and a third planetary member is drivingly connected to the at least one drive shaft.

## Description

### TECHNICAL FIELD

The disclosure relates generally to electric drivelines. In particular aspects, the disclosure relates to an electric driveline with a planetary gear set inside a stator cavity. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electric drivelines are increasingly used in heavy-duty vehicles such as trucks and construction machinery. These systems must meet demanding requirements related to efficiency, torque delivery, packaging constraints, and adaptability across different applications. There is however a need to develop driveline architectures that offer high torque at low speeds, improved efficiency, and simplified mechanical complexity suitable for heavy-duty performance requirements.

### SUMMARY

According to a first aspect of the disclosure, there is provided an electric driveline for a vehicle, the electric driveline comprising: an electric machine comprising a stator and a rotor, the stator being accommodated radially inside the rotor and comprising a cavity formed radially inside the stator; at least one drive shaft drivingly connectable to a wheel of the vehicle; and a first planetary gear set arranged in the cavity, the first planetary gear set comprising a plurality of planetary members, the planetary members comprising a first sun gear wheel, a first ring gear wheel, and a first planet carrier carrying a plurality of planet gear wheels, wherein each planet gear wheel is in meshing engagement with the first sun gear wheel and the first ring gear wheel, wherein a first planetary member is directly connected to the rotor, a second planetary member is selectively connectable to the stator via a first brake, and a third planetary member is drivingly connected to the at least one drive shaft.

The first aspect of the disclosure may seek to provide an electric driveline that improves efficiency, torque delivery, packaging, weight reduction, and modularity for heavy-duty vehicles, while addressing limitations of existing high-speed electric motors that require multiple gear reductions. The disclosure provides a low-speed, high-torque driveline solution that reduces mechanical complexity, improves energy efficiency, and enables flexible vehicle adaptations through the integration of planetary gear systems within the stator cavity. A technical benefit may include providing a compact and integrated driveline structure by arranging the stator radially inside the rotor and forming a cavity inside the stator to house a planetary gear set. Locating the planetary gear set within the stator cavity may enable high torque delivery at low rotational speeds and reduce the number of required external reduction stages, thereby lowering mechanical complexity. The configuration in which a planetary member is connected directly to the rotor and another planetary member is selectively connectable to the stator via a brake may allow for controlled torque transfer and operational flexibility. Drivingly connecting a planetary member to the drive shaft may provide an efficient torque transfer path that minimizes transmission losses within the driveline and supports reduced packaging volume and system weight.

The cavity formed radially inside the stator is configured to concentrically accommodate the first planetary gear set. In this arrangement, the stator is itself arranged concentrically inside the rotor, and the first planetary gear set is positioned concentrically within an internal space of the stator.

As used herein, the term "drivingly connected" should be construed as referring to two components being connected such that torque is transmitted between them to cause rotation, but not necessarily at the same rotational speed. A clutch, gear stage, planetary gear set, or other transmission component may be arranged between components that are defined as drivingly connected to each other. Thus, the rotational speeds of the respective components may differ even though torque is transmitted between them.

The term "drivingly connectable" should be construed as referring to a component, such as a drive shaft, that is either currently drivingly connected to another component or is configured to be drivingly connected to another component, for example via a clutch, gear stage, planetary gear set, etc.

The term "directly connected" should be construed as referring to two components being connected without any transmission component, such as a clutch, gear stage, or planetary gear set, etc., arranged there between. Components that are directly connected to each other rotate together at the same rotational speed.

Optionally in some examples, including in at least one preferred example, the electric driveline further comprises a first clutch configured to selectively connect the second planetary member to the rotor. A technical benefit may include providing the ability to selectively connect the second planetary member to the rotor using the first clutch, thereby enabling a change between different operational states of the planetary gear set. Connecting the second planetary member to the rotor via the first clutch may allow modification of the internal torque distribution and adjustment of the transmission characteristics of the electric driveline without requiring additional external gear stages. Selectively engaging the first clutch may further support maintaining a compact and efficient electric driveline while enabling adaptable torque delivery depending on driving requirements. Also, the electric driveline may achieve two distinct gear stages or operational states. Accordingly, a compact two-speed electric driveline may hereby be obtained.

Optionally in some examples, including in at least one preferred example, the first planetary member comprises the sun gear wheel. Optionally in some examples, including in at least one preferred example, the second planetary member comprises the ring gear wheel. Optionally in some examples, including in at least one preferred example, the third planetary member comprises the planet carrier. A technical benefit of arranging the first, second and third planetary members as the sun gear, the ring gear and the planet carrier, respectively, may include that configuring the first planetary member as the sun gear wheel allows the planetary gear set to be used efficiently for reducing rotational speed while increasing torque output from the electric machine. Hereby, an efficient torque conversion in driveline applications where high torque at lower speeds is desirable may be obtained.

Optionally in some examples, including in at least one preferred example, the electric driveline comprises a pair of drive shafts, and a mechanical linkage configured to mechanically connect the pair of drive shafts to each other. A technical benefit may include that providing a pair of drive shafts and a mechanical linkage configured to mechanically connect the pair of drive shafts to each other may enable distribution of torque between two wheels. Mechanically connecting the drive shafts may allow torque to be transferred from one wheel to the other in case of differing traction conditions, thereby improving vehicle drivability and traction stability. The mechanical linkage may further enable selectable coupling between the drive shafts depending on operating conditions.

Optionally in some examples, including in at least one preferred example, the third planetary member is drivingly connected or connectable to the pair of drive shafts via the mechanical linkage.

Optionally in some examples, including in at least one preferred example, the mechanical linkage is a differential unit. A technical benefit may include that torque can be distributed equally between left and right wheels. Providing a differential unit may improve drivability by enabling different rotational speeds of the wheels during cornering or when encountering uneven traction surfaces. The use of a differential unit may further reduce stress on driveline components and contribute to smoother and improved vehicle handling. As used herein, a "differential unit" thus refers to a mechanical device configured to distribute torque between a pair of drive shafts, typically allowing differential rotational speeds under cornering or load variation.

Optionally in some examples, including in at least one preferred example, the differential unit comprises a second planetary gear set comprising a plurality of planetary members, the planetary members comprising a second sun gear wheel, a second ring gear wheel, and a second planet carrier carrying a plurality of second planet gear wheels, wherein a first set of the second planet gear wheels is in meshing engagement with the second sun gear wheel and a second set of the second planet gear wheels is in meshing engagement with the second ring gear wheel. A technical benefit may include that, by providing the differential unit with a second planetary gear set that comprises distinct first and second sets of planet gear wheels, effective torque balancing between the drive shafts may be enabled. Arranging one set of planet gear wheels to mesh with the sun gear wheel and the other set to mesh with the ring gear wheel may allow relative rotation between the drive shafts while maintaining controlled torque distribution.

Optionally in some examples, including in at least one preferred example, a first planetary member of the second planetary gear set is directly connected to a second one of the pair of drive shafts; a second planetary member of the second planetary gear set is directly connected to the third planetary member of the first planetary gear set; and a third planetary member of the second planetary gear set is directly connected to a first one of the pair of drive shafts.

Optionally in some examples, including in at least one preferred example, the electric driveline further comprises a second clutch configured to selectively connect the first one of the pair of drive shafts to the second one of the pair of drive shafts. A technical benefit may include that controlled engagement or disengagement of torque transmission paths may be enabled. Selectively connecting the first one of the pair of drive shafts to the second one of the pair of drive shafts may allow adaptable torque distribution between the drive shafts depending on traction conditions or operational requirements.

Optionally in some examples, including in at least one preferred example, the first planetary member of the second planetary gear set comprises the second sun gear wheel; the second planetary member of the second planetary gear set comprises the second ring gear wheel; and the third planetary member of the second planetary gear set comprises the second planet carrier.

Optionally in some examples, including in at least one preferred example, the electric driveline further comprises a third planetary gear set arranged in the cavity, the third planetary gear set comprising a plurality of planetary members, the planetary members of the third planetary gear set comprising a third sun gear wheel, a third ring gear wheel, and a third planet carrier carrying a plurality of third planet gear wheels, wherein each third planetary gear wheel is in meshing engagement with the third sun gear wheel and the third ring gear wheel, wherein a first planetary member of the third planetary gear set is directly connected to the first planetary member of the first planetary gear set; a second planetary member of the third planetary gear set is selectively connectable to the stator via a second brake; and a third member of the third planetary gear set is directly connected to the second member of the first planetary gear set. A technical benefit may include that, by providing a third planetary gear set arranged in the cavity and connected to the first planetary gear set, the electric driveline may be enabled to achieve three distinct gear stages or operational states. Connecting the planetary members of the third planetary gear set to the first planetary gear set and selectively connecting a planetary member to the stator via a second brake may allow controlled switching between different speed and torque configurations without requiring external transmission components. Accordingly, a compact three-speed electric driveline may hereby be obtained.

Optionally in some examples, including in at least one preferred example, the first planetary member of the third planetary gear set comprises the third sun gear wheel; the second planetary member of the third planetary gear set comprises the third ring gear wheel; and the third planetary member of the third planetary gear set comprises the third planet carrier. A technical benefit may include that, compared to the above described two-speed electric driveline, an additional gear stage can be obtained. Such additional gear stage may have a gear ratio between the gear ratios of a the two-speed electric driveline.

Optionally in some examples, including in at least one preferred example, the mechanical linkage is a connecting clutch. A technical benefit may include that configuring the mechanical linkage as a connecting clutch may allow the drive shafts to be selectively interconnected depending on driving conditions. Selectively connecting the drive shafts via the connecting clutch may enable torque transfer between the wheels when needed, while allowing independent operation of the drive shafts when the connecting clutch is disengaged.

Optionally in some examples, including in at least one preferred example, the electric driveline further comprises a second electric machine comprising a second stator and a second rotor, the second stator being accommodated radially inside the second rotor and comprising a second cavity formed radially inside the second stator; a second planetary gear set arranged in the second cavity, the second planetary gear set comprising a plurality of planetary members, the planetary members comprising a second sun gear wheel, a second ring gear wheel, and a second planet carrier carrying a plurality of second planet gear wheels, wherein each second planetary gear wheel is in meshing engagement with the second sun gear wheel and the second ring gear wheel; wherein a first planetary member of the second planetary gear set is directly connected to the second rotor; a second planetary member of the second planetary gear set is selectively connectable to the second stator via a second brake; and a third planetary member of the second planetary gear set is drivingly connected to a second one of the pair of drive shafts. A technical benefit may include that providing a second electric machine with its own stator, rotor, and planetary gear set may allow independent torque control of each drive shaft. Driving each wheel with a separate electric machine may improve traction management, enable flexible distribution of drive torque depending on road conditions, and provide operational redundancy in case of a failure of one motor. Arranging each planetary gear set concentrically within the respective stator may contribute to a compact and efficient driveline structure suitable for heavy-duty applications.

Optionally in some examples, including in at least one preferred example, the electric driveline further comprises a second clutch configured to selectively connect the second planetary member of the second planetary gear set to the second rotor. A technical benefit may include providing the ability to selectively connect the second planetary member of the second planetary gear set to the second rotor using the second clutch, thereby enabling a change between different operational states of the second planetary gear set. Connecting the second planetary member of the second planetary gear set to the second rotor via the second clutch may allow modification of the internal torque distribution and adjustment of the transmission characteristics of the electric driveline without requiring additional external gear stages. Selectively engaging the second clutch may further support maintaining a compact and efficient electric driveline while enabling adaptable torque delivery depending on driving requirements. It may hence be possible to gain access to a two-stage transmission, similar to the one described above, but which two-stage transmission is operating the second one of the pair of drive shafts.

Optionally in some examples, including in at least one preferred example, the third planetary member of the second planetary gear set is directly connected to the connecting clutch.

Optionally in some examples, including in at least one preferred example, the first planetary member of the second planetary gear set comprises the second sun gear wheel; the second planetary member of the second planetary gear set comprises the second ring gear wheel; and the third planetary member of the second planetary gear set comprises the second planet carrier. A technical benefit may include that a separate two-stage transmission can be provided also for the second one of the pair of drive shafts.

According to a second aspect, there is provided a vehicle comprising the electric driveline according to any of the examples described above in relation to the first aspect. Effects and features of the second aspect are largely analogous to those described above in relation to the first aspect.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary vehicle according to an example.
Figs. 2 - 3 are exemplary illustrations of an electric machine according to an example.
Figs. 4 - 6 are exemplary electric drivelines according to examples.

### DETAILED DESCRIPTION

The detailed description set forth below provides information and examples of the disclosed technology with sufficient detail to enable those skilled in the art to practice the disclosure.

The following disclosure aims at providing an electric driveline that improves efficiency, torque delivery, packaging, weight reduction, and modularity for heavy-duty vehicles, while addressing limitations of existing high-speed electric motors that require multiple gear reductions. The following will describe a low-speed, high-torque electric driveline solution that reduces mechanical complexity, improves energy efficiency, and enables flexible vehicle adaptations through the integration of planetary gear systems within a stator cavity. A technical benefit may include providing a compact and integrated driveline structure by arranging the stator radially inside the rotor and forming a cavity inside the stator to house a planetary gear set.

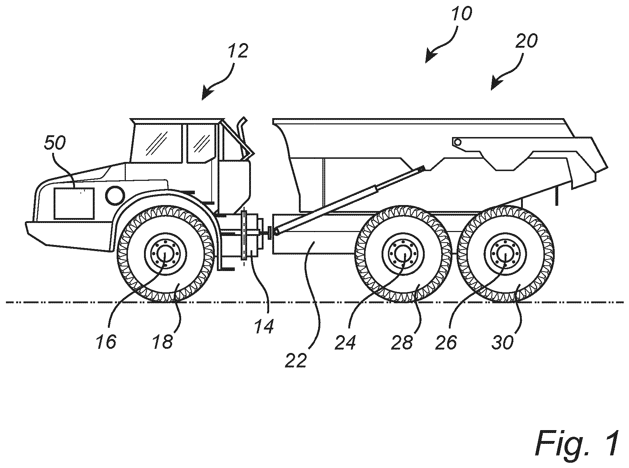

Fig. 1 is an exemplary vehicle 10 according to an example. The vehicle 10 is exemplified as a working machine and may in the following be referred to as such. In particular, the Fig. 1 working machine is exemplified as a frame-steered articulated hauler, also called dumper. As can be seen from Fig. 1, the working machine 10 illustrated therein comprises a front working machine section 12 comprising a front frame 14 and a front wheel axle 16. The front axle 16 is in turn connected to a pair of front wheels 18, although only the left front wheel is visible in Fig. 1.

Moreover, as seen in Fig. 1, the working machine 10 comprises a rear working machine section 20 comprising a rear frame 22, a front rear axle 24 and a back rear axle 26. The front rear axle 24 is connected to a pair of wheels 28. In a similar vein, the back rear axle 26 is connected to a pair of wheels 30. Although the Fig. 1 example of the working machine 10 comprises two rear axles 24, 26, it is also envisaged that examples of the working machine may be equipped with only one rear axle (not shown). The working machine 10 further comprises an energy storage system 50. The energy storage system 50 is preferably a traction battery and can be configured to receive electrical power from the below described electric driveline. The traction battery may also be configured to receive electrical power from a power grid.

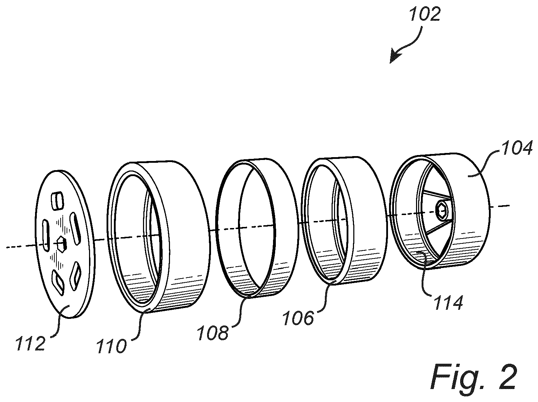

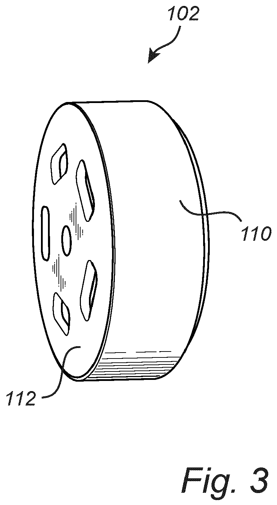

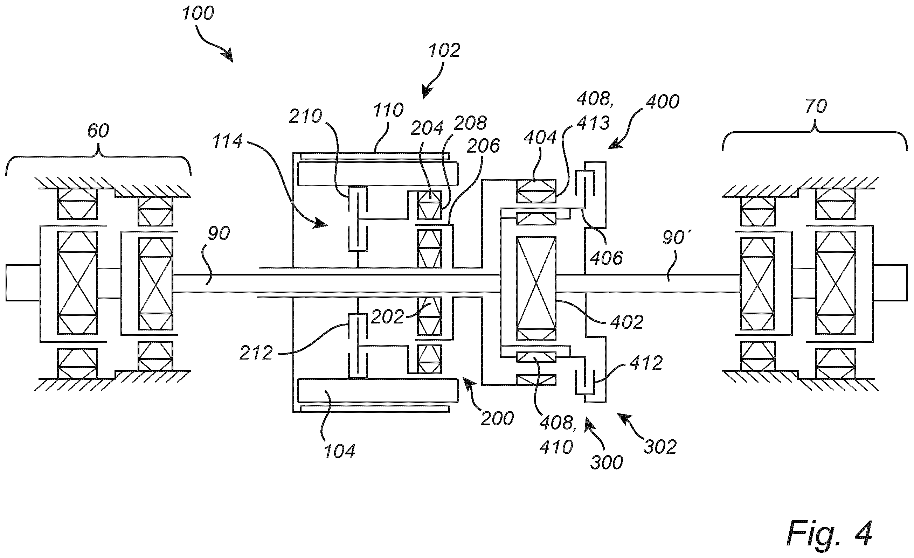

The front axle 16 may be a so-called electric wheel axle and may comprise an electric driveline 100 illustrated in Figs. 4 - 6 and described in further detail below. It should be understood that also the front rear axle 24 as well as the back rear axle 26 may be electric wheel axles comprising the below described electric driveline 100. In order to initially describe the electric machine 102 that forms part of this electric driveline 100, reference is made to Figs. 2 - 3, which are exemplary illustrations of an electric machine 102 according to an example, where Fig. 2 is an exploded view of the electric machine 102 and Fig. 3 illustrates the electric machine 102 in an assembled configuration.

As can be seen in Fig. 2, the electric machine 102 comprises a stator 104 in the form of a stator housing, windings 106, permanent magnets 108, a rotor 110 in the form of a rotor housing, and a rotor holder 112. The components in Fig. 2 are schematically illustrated for simplifying for the skilled reader. The stator housing 104 is arranged coaxially inside the windings 106, which are in turn arranged coaxially inside the permanent magnets 108. The permanent magnets 108 are arranged coaxially inside the rotor housing 110. The windings 106 are preferably fixated to the stator housing while the permanent magnets are preferably fixated to the rotor housing 110. Finally, the rotor holder 112 is connected to the rotor housing 110. As is evident from Figs. 2 - 3, the stator 104 is hence accommodated radially inside the rotor 110. The stator 104 further comprises a cavity 114 which is formed radially inside the stator 104.

Reference is now made to Fig. 4 which illustrates the electric driveline 100 according to an example. The exemplified electric driveline 100 comprises the above described electric machine 102, a first planetary gear set 200 arranged concentrically within the cavity 114 formed radially inside the stator 104, and at least one drive shaft 90 which is drivingly connectable to a wheel 18, 28, 30 of a vehicle 10. The drive shaft 90 may hence correspond to one of the above described front wheel axle 16, front rear axle 24 and back rear axle 26. As can be seen in Fig. 4, the electric driveline 100 comprises a pair of drive shafts, i.e. a first drive shaft 90 connected to one of a pair of wheels (not illustrated in Fig. 4), and a second drive shaft 90' connected to a another one of the pair of wheels (not illustrated in Fig. 4). As exemplified in Fig. 4, the pair of drive shafts are connected to the respective wheel via a planetary gear structure 60, 70 working as hub reduction units.

Moreover, the first planetary gear set 200 comprises a plurality of planetary members 202, 204, 206, including a first sun gear wheel 202, a first ring gear wheel 204, and a first planet carrier 206 carrying a plurality of planet gear wheels 208. Each planet gear wheel 208 is in meshing engagement with both the first sun gear wheel 202 and the first ring gear wheel 204.

As exemplified in Fig. 4, a first planetary member, for example the sun gear wheel 202, is directly connected to the rotor 110, enabling direct transfer of motor torque into the planetary gear set 200. A second planetary member, for example the ring gear wheel 204, is selectively connectable to the stator 104 via a first brake 210, thereby enabling switching between different operational states of the planetary gear set. A third planetary member, for example the planet carrier 206, is drivingly connected to the drive shafts 90, 90', thereby transferring the output torque to the wheels of the vehicle 10.

As further exemplified in Fig. 4, the electric driveline 100 may further comprise a first clutch 212. The first clutch 212 is configured to selectively connect the second planetary member, such as the ring gear wheel 204, to the rotor 110. According to another, non-illustrated example, the first clutch 212 may be arranged to selectively connect the third planetary member, such as the planet carrier 206 to the rotor. By means of the above description, a two-stage electric driveline 100 is obtained. A first gear stage can be obtained by engaging the first brake 210 and arranging the first clutch 212 disengaged. A second gear stage can be obtained by engaging the first clutch 212 and arranging the first brake 210 disengaged.

Furthermore, the exemplified electric driveline 100 comprises a mechanical linkage 300 configured to mechanically connect the pair of drive shafts 90, 90' to each other. In particular, the third planetary member of the first planetary gear set 200 may be drivingly connected or connectable to the pair of drive shafts via the mechanical linkage 300. In example illustrated in Fig. 4, the mechanical linkage 300 is implemented as a differential unit 302, allowing relative rotation between the drive shafts and thereby enabling torque distribution between left and right wheels during cornering or low-traction conditions.

The exemplified differential unit 302 comprises a second planetary gear set 400, comprising a second sun gear wheel 402, a second ring gear wheel 404, and a second planet carrier 406 carrying a plurality of second planet gear wheels 408. The plurality of second planet gear wheels 408 comprises a first set 410 of the second planet gear wheels 408 which is in meshing engagement with the second sun gear wheel 402, and a second set 413 of the second planet gear wheels 408 which is in meshing engagement with the second ring gear wheel 404. By arranging a first set 410 of the second planet gear wheels 408 in meshing engagement with the second sun gear wheel 402 and a second set 413 of the second planet gear wheels 408 in meshing engagement with the second ring gear wheel 404, the planet gear wheels of the respective sets are caused to rotate in opposite directions relative to each other during operation. This configuration may contribute to the torque balancing function of the differential unit 302, as it allows the second planet carrier 406 to enable relative rotation between the connected drive shafts.

Further, a first planetary member, such as the second sun gear wheel 402, of the second planetary gear set 400 is directly connected to a second one 90' of the pair of drive shafts. A second planetary member, such as the second ring gear wheel 404, of the second planetary gear set is directly connected to the third planetary member of the first planetary gear set 200, and a third planetary member, such as the second planet carrier 406, of the second planetary gear set is directly connected to a first one 90 of the pair of drive shafts.

In the example of Fig. 4, the electric driveline 100 further comprises a second clutch 412. The second clutch is configured to selectively connect the third planetary member, such as the planet carrier 406, of the second planetary gear set 400 to the second one of the pair of drive shafts. By means of the second clutch 412, the first 90 and second 90' drive shafts can be connected to each other and torque can, for example, be transmitted from the electric machine 102 to the second drive shaft 90'.

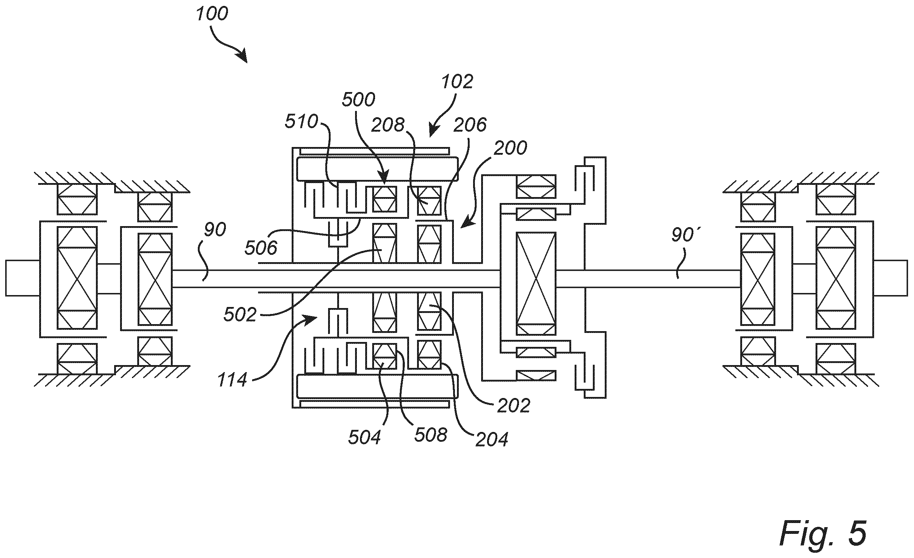

The electric driveline 100 described above and illustrated in Fig. 4 thus utilizes a single electric machine 102 and can obtain two distinct gear stages. In order to describe an alternative example of the electric driveline 100, reference is now made to Fig. 5 which comprises the same structural elements as described above in relation to Fig. 4, i.e. the electric machine 102, the first planetary gear set 200 arranged in the stator cavity 114, and the differential unit 302 with the second planetary gear set 400. In addition, the electric driveline 100 in Fig. 5 further comprises a third planetary gear set 500 arranged in the cavity 114.

The third planetary gear set 500 comprises a plurality of planetary members 502, 504, 506, including a third sun gear wheel 502, a third ring gear wheel 504, and a third planet carrier 506 carrying a plurality of third planet gear wheels 508. Each third planet gear wheel 508 is in meshing engagement with both the third sun gear wheel 502 and the third ring gear wheel 504. The third planetary gear set 500 is arranged in the cavity 114 of the stator 104 and is structurally and functionally connected to the first planetary gear set 200. In at least one example, the first planetary member of the third planetary gear set 500 comprises the third sun gear wheel 502, the second planetary member comprises the third ring gear wheel 504, and the third planetary member comprises the third planet carrier 506.

A first planetary member, such as the third sun gear wheel 502, of the third planetary gear set 500 is directly connected to the first planetary member, such as the first sun gear wheel 202, of the first planetary gear set 200. A second planetary member, such as the third ring gear wheel 504, is selectively connectable to the stator 104 via a second brake 510. A third planetary member, such as the third planet carrier 506, is directly connected to the second planetary member, such as the first ring gear wheel 204, of the first planetary gear set 200.

By the arrangement depicted in Fig. 5, the third planetary gear set 500 operates in coordination with the first planetary gear set 200 to enable an additional gear stage, achieving now three distinct gear stages or torque states within the electric driveline 100. Selective actuation of the second brake 510, in combination with the first brake 210 and/or the first clutch 212, allows adjustment of the torque transfer path. In further detail, a first gear stage can be obtained by engaging the first brake while disengaging the second brake and the first clutch, a second gear stage can be obtained by engaging the second brake while disengaging the first brake and the first clutch, and a third gear stage can be obtained by engaging the first clutch, while disengaging the first and second brakes.

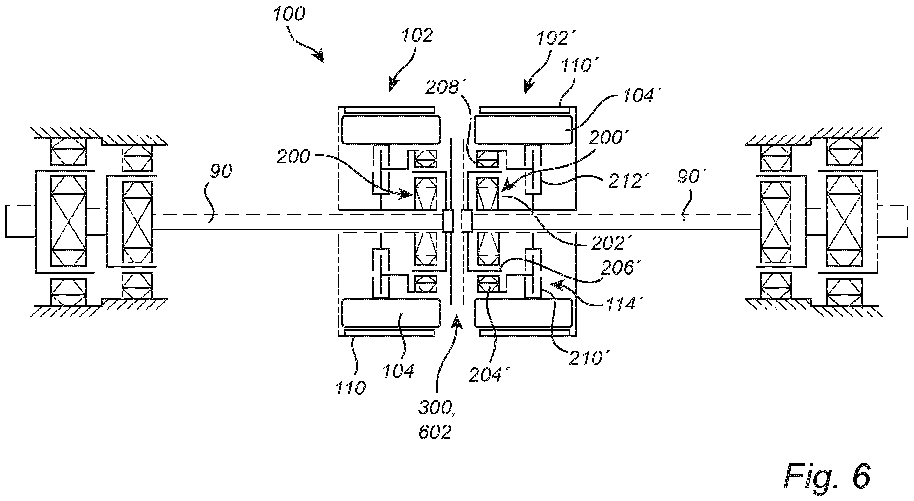

Reference is now made to Fig. 6 which illustrates the electric driveline 100 according to yet another example. The electric driveline 100 in Fig. 6 comprises a dual-motor configuration. The electric driveline 100 comprises the first electric machine 102 and the first planetary gear set 200 described above in relation to Fig. 4. However, no differential unit is provided between the pair of drive shafts. Instead, a second electric machine 102' is connected to the second one 90' of the pair of drive shafts.

The second electric machine 102' comprises a second stator 104' and a second rotor 110'. The second stator 104' is accommodated radially inside the second rotor 110', and a second cavity 114' is formed radially inside the second stator 104'. A second planetary gear set 200' is arranged in the second cavity 114'. The second planetary gear set 200' comprises a plurality of planetary members 202', 204', 206', including a second sun gear wheel 202', a second ring gear wheel 204', and a second planet carrier 206' carrying a plurality of second planet gear wheels 208'. Each second planet gear wheel 208' is in meshing engagement with both the second sun gear wheel 202' and the second ring gear wheel 204'. In the example depicted in Fig. 6, the first planetary member of the second planetary gear set 200' comprises the second sun gear wheel 202', the second planetary member comprises the second ring gear wheel 204', and the third planetary member comprises the second planet carrier 206'.

It should be noted that the second planetary gear set 200' described in connection with the second electric machine 102' in Fig. 6 is structurally and functionally distinct from the second planetary gear set 400 described in relation to Fig. 4. While the planetary gear set 400 in Fig. 4 forms part of a differential unit for torque distribution between drive shafts, the planetary gear set 200' in Fig. 6 operates as part of the second electric machine 102' and provides individual torque transmission to the second drive shaft.

Further, a first planetary member, such as the second sun gear wheel 202', of the second planetary gear set 200' is directly connected to the second rotor 110'. A second planetary member, such as the second ring gear 204', of the second planetary gear set is selectively connectable to the second stator 104' via a second brake 210'. A third planetary member, such as the second planet carrier 206', of the second planetary gear set is drivingly connected to the second one of the pair of drive shafts 90'. The electric driveline 100 further comprises a second clutch 212'. The second clutch 212' is configured to selectively connect the second planetary member, such as the second ring gear 204', of the second planetary gear set 200' to the second rotor 110'. Alternatively, the second clutch 212' may be configured to selectively connect the third planetary member, such as the second planet carrier 206', of the second planetary gear set 200' to the second rotor 110'. The configuration of the second electric machine 102' and second planetary gear set 200' is thus substantially the same as the structure of the first electric machine 102 and the first planetary gear set 200.

Moreover, the electric driveline 100 depicted in Fig. 6 comprises a mechanical linkage 300 between the first and second drive shafts. The mechanical linkage 300 is implemented as a connecting clutch 602. The connecting clutch 602 enables selective torque transfer between the drive shafts, thereby permitting coordinated or independent operation of the two electric machines. In other words, the pair of drive shafts are connectable to each other via the connecting clutch 602.

### EXAMPLE LIST

Example 1. An electric driveline (100) for a vehicle (10), the electric driveline (100) comprising an electric machine (102) comprising a stator (104) and a rotor (110), the stator being accommodated radially inside the rotor and comprising a cavity (114) formed radially inside the stator; at least one drive shaft (90) drivingly connectable to a wheel (18, 28, 30) of the vehicle; and a first planetary gear set (200) arranged in the cavity, the first planetary gear set comprising a plurality of planetary members (202, 204, 206), the planetary members comprising a first sun gear wheel (202), a first ring gear wheel (204), and a first planet carrier (206) carrying a plurality of planet gear wheels (208), wherein each planet gear wheel is in meshing engagement with the first sun gear wheel and the first ring gear wheel, wherein a first planetary member is directly connected to the rotor (110), a second planetary member is selectively connectable to the stator (104) via a first brake (210), and a third planetary member is drivingly connected to the at least one drive shaft (90).

Example 2. The electric driveline (100) of example 1, further comprising a first clutch (212) configured to selectively connect the second planetary member to the rotor (110).

Example 3. The electric driveline of any one of examples 1 or 2, wherein the first planetary member comprises the sun gear wheel (202).

Example 4. The electric driveline of any one of the preceding examples, wherein the second planetary member comprises the ring gear wheel (204).

Example 5. The electric driveline of any one of the preceding examples, wherein the third planetary member comprises the planet carrier (206).

Example 6. The electric driveline (100) of any one of the preceding examples, wherein the electric driveline comprises a pair of drive shafts (90, 90'), and a mechanical linkage (300) configured to mechanically connect the pair of drive shafts to each other.

Example 7. The electric driveline (100) of example 6, wherein the third planetary member is drivingly connected, or connectable to the pair of drive shafts (90, 90') via the mechanical linkage (300).

Example 8. The electric driveline (100) of any one of examples 6 or 7, wherein the mechanical linkage (300) is a differential unit (302).

Example 9. The electric driveline (100) of example 8, wherein the differential unit (302) comprises a second planetary gear set (400) comprising a plurality of planetary members (402, 404, 406), the planetary members comprising a second sun gear wheel (402), a second ring gear wheel (404), and a second planet carrier (406) carrying a plurality of second planet gear wheels (408), wherein a first set (410) of the second planet gear wheels (408) is in meshing engagement with the second sun gear wheel (402) and a second set (413) of the second planet gear wheels (408) is in meshing engagement with the second ring gear wheel (404).

Example 10. The electric driveline (100) of example 9, wherein a first planetary member of the second planetary gear set is directly connected to a second one (90') of the pair of drive shafts; a second planetary member of the second planetary gear set is directly connected to the third planetary member of the first planetary gear set (200); and a third planetary member of the second planetary gear set is directly connected to a first one (90) of the pair of drive shafts.

Example 11. The electric driveline (100) of example 10, further comprising a second clutch (412) configured to selectively connect the first one of the pair of drive shafts to the second one of the pair of drive shafts.

Example 12. The electric driveline (100) of any one of examples 10 - 11, wherein the first planetary member of the second planetary gear set comprises the second sun gear wheel (402); the second planetary member of the second planetary gear set comprises the second ring gear wheel (404); and the third planetary member of the second planetary gear set comprises the second planet carrier (406).

Example 13. The electric driveline (100) of any one of the preceding examples, further comprising a third planetary gear set (500) arranged in the cavity (114), the third planetary gear set (500) comprising a plurality of planetary members (502, 504, 506), the planetary members of the third planetary gear set comprising a third sun gear wheel (502), a third ring gear wheel (504), and a third planet carrier (506) carrying a plurality of third planet gear wheels (508), wherein each third planet gear wheel is in meshing engagement with the third sun gear wheel and the third ring gear wheel, wherein a first planetary member of the third planetary gear set is directly connected to the first planetary member of the first planetary gear set; a second planetary member of the third planetary gear set is selectively connectable to the stator via a second brake (510); and a third planetary member of the third planetary gear set is directly connected to the second planetary member of the first planetary gear set.

Example 14. The electric driveline (100) of example 13, wherein the first planetary member of the third planetary gear set comprises the third sun gear wheel (502); the second planetary member of the third planetary gear set comprises the third ring gear wheel (504); and the third planetary member of the third planetary gear set comprises the third planet carrier (506).

Example 15. The electric driveline (100) of any one of examples 6 or 7, wherein the mechanical linkage (300) is a connecting clutch (602).

Example 16. The electric driveline (100) of any one of examples 1 - 7 or 15, further comprising a second electric machine (102') comprising a second stator (104') and a second rotor (110'), the second stator being accommodated radially inside the second rotor and comprising a second cavity (114') formed radially inside the second stator; a second planetary gear set (200') arranged in the second cavity, the second planetary gear set comprising a plurality of planetary members (202', 204', 206'), the planetary members comprising a second sun gear wheel (202'), a second ring gear wheel (204'), and a second planet carrier (206') carrying a plurality of second planet gear wheels (208'), wherein each second planetary gear wheel is in meshing engagement with the second sun gear wheel and the second ring gear wheel; wherein a first planetary member of the second planetary gear set is directly connected to the second rotor (110'); a second planetary member of the second planetary gear set is selectively connectable to the second stator via a second brake (210'); and a third planetary member of the second planetary gear set is drivingly connected to a second one (90') of a pair of drive shafts.

Example 17. The electric driveline (100) of example 16, further comprising a second clutch (212') configured to selectively connect the second planetary member of the second planetary gear set to the second rotor (110').

Example 18. The electric driveline of any one of examples 15 - 17, wherein the third planetary member of the second planetary gear set is directly connected to the connecting clutch (602).

Example 19. The electric driveline of any one of examples 16 - 18, wherein the first planetary member of the second planetary gear set comprises the second sun gear wheel (202'); the second planetary member of the second planetary gear set comprises the second ring gear wheel (204'); and the third planetary member of the second planetary gear set comprises the second planet carrier (206').

Example 20. A vehicle (10) comprising the electric driveline (100) according to any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric driveline (100) for a vehicle (10), the electric driveline (100) comprising:
an electric machine (102) comprising a stator (104) and a rotor (110), the stator being accommodated radially inside the rotor and comprising a cavity (114) formed radially inside the stator;
at least one drive shaft (90) drivingly connectable to a wheel (18, 28, 30) of the vehicle; and
a first planetary gear set (200) arranged in the cavity, the first planetary gear set comprising a plurality of planetary members (202, 204, 206), the planetary members comprising a first sun gear wheel (202), a first ring gear wheel (204), and a first planet carrier (206) carrying a plurality of planet gear wheels (208), wherein each planet gear wheel is in meshing engagement with the first sun gear wheel and the first ring gear wheel,
wherein a first planetary member is directly connected to the rotor (110), a second planetary member is selectively connectable to the stator (104) via a first brake (210), and a third planetary member is drivingly connected to the at least one drive shaft (90).

2. The electric driveline (100) of claim 1, further comprising a first clutch (212) configured to selectively connect the second planetary member to the rotor (110).

3. The electric driveline of any one of claims 1 or 2, wherein the first planetary member comprises the sun gear wheel (202), the second planetary member comprises the ring gear wheel (204), and the third planetary member comprises the planet carrier (206).

4. The electric driveline (100) of any one of the preceding claims, wherein the electric driveline comprises a pair of drive shafts (90, 90'), and a mechanical linkage (300) configured to mechanically connect the pair of drive shafts to each other.

5. The electric driveline (100) of claim 4, wherein the third planetary member is drivingly connected, or connectable to the pair of drive shafts (90, 90') via the mechanical linkage (300).

6. The electric driveline (100) of any one of claims 4 or 5, wherein the mechanical linkage (300) is a differential unit (302).

7. The electric driveline (100) of claim 6, wherein the differential unit (302) comprises a second planetary gear set (400) comprising a plurality of planetary members (402, 404, 406), the planetary members comprising a second sun gear wheel (402), a second ring gear wheel (404), and a second planet carrier (406) carrying a plurality of second planet gear wheels (408), wherein a first set (410) of the second planet gear wheels (408) is in meshing engagement with the second sun gear wheel (402) and a second set (413) of the second planet gear wheels (408) is in meshing engagement with the second ring gear wheel (404).

8. The electric driveline (100) of claim 7, wherein
a first planetary member of the second planetary gear set is directly connected to a second one (90') of the pair of drive shafts;
a second planetary member of the second planetary gear set is directly connected to the third planetary member of the first planetary gear set (200); and
a third planetary member of the second planetary gear set is directly connected to a first one (90) of the pair of drive shafts.

9. The electric driveline (100) of claim 8, further comprising a second clutch (412) configured to selectively connect the first one of the pair of drive shafts to the second one of the pair of drive shafts.

10. The electric driveline (100) of any one of the preceding claims, further comprising a third planetary gear set (500) arranged in the cavity (114), the third planetary gear set (500) comprising a plurality of planetary members (502, 504, 506), the planetary members of the third planetary gear set comprising a third sun gear wheel (502), a third ring gear wheel (504), and a third planet carrier (506) carrying a plurality of third planet gear wheels (508), wherein each third planet gear wheel is in meshing engagement with the third sun gear wheel and the third ring gear wheel, wherein
a first planetary member of the third planetary gear set is directly connected to the first planetary member of the first planetary gear set;
a second planetary member of the third planetary gear set is selectively connectable to the stator via a second brake (510); and
a third planetary member of the third planetary gear set is directly connected to the second planetary member of the first planetary gear set.

11. The electric driveline (100) of any one of claims 4 or 5, wherein the mechanical linkage (300) is a connecting clutch (602).

12. The electric driveline (100) of any one of claims 1 - 5 or 11, further comprising
a second electric machine (102') comprising a second stator (104') and a second rotor (110'), the second stator being accommodated radially inside the second rotor and comprising a second cavity (114') formed radially inside the second stator;
a second planetary gear set (200') arranged in the second cavity, the second planetary gear set comprising a plurality of planetary members (202', 204', 206'), the planetary members comprising a second sun gear wheel (202'), a second ring gear wheel (204'), and a second planet carrier (206') carrying a plurality of second planet gear wheels (208'), wherein each second planetary gear wheel is in meshing engagement with the second sun gear wheel and the second ring gear wheel; wherein
a first planetary member of the second planetary gear set is directly connected to the second rotor (110');
a second planetary member of the second planetary gear set is selectively connectable to the second stator via a second brake (210'); and
a third planetary member of the second planetary gear set is drivingly connected to a second one (90') of a pair of drive shafts.

13. The electric driveline (100) of claim 12, further comprising a second clutch (212') configured to selectively connect the second planetary member of the second planetary gear set to the second rotor (110').

14. The electric driveline of any one of claims 11 - 13, wherein the third planetary member of the second planetary gear set is directly connected to the connecting clutch (602).

15. A vehicle (10) comprising the electric driveline (100) according to any of claims 1-14.
